# EUROPEAN PATENT SPECIFICATION

(11) **EP 2 752 823 B1**
(45) Date of publication and mention of the grant of the patent: **28.08.2019**
(21) Application number: 11871480.7
(22) Date of filing: 30.08.2011
(51) Int. Cl.: G06K 7/08, G07F 19/00, G07F 7/08

(54) **DEVICE FOR READING MAGNETIC RECORDING MEDIUM**
VORRICHTUNG ZUM LESEN MAGNETISCHER AUFZEICHNUNGSMEDIEN
DISPOSITIF DE LECTURE DE SUPPORT D'ENREGISTREMENT MAGNÉTIQUE

(43) Date of publication of application: 09.07.2014
(73) Proprietor: Hitachi-Omron Terminal Solutions, Corporation, Tokyo 141-8576 (JP)
(72) Inventor: SUZUKI, Hiroyuki, Tokyo 141-8576 (JP); TADAMASA, Akihiro, Tokyo 141-8576 (JP); MAI, Jianzhong, Tokyo 141-8576 (JP); KAWAGUCHI, Ryota, Tokyo 141-8576 (JP)
(74) Representative: MERH-IP Matias Erny Reichl Hoffmann Patentanwälte PartG mbB
(86) International application number: PCT/JP2011/004825
(87) International publication number: WO 2013/030875

(56) References cited:
- WO-A1-2010/000004
- WO-A1-2010/000004
- DE-A1-102010 000 102
- JP-A- 2001 067 524
- JP-A- 2001 067 524
- JP-A- 2010 205 187
- JP-A- 2011 100 404

## Description

### TECHNICAL FIELD

The present invention relates to a device for reading data recorded on a magnetic recording medium, and in particular to a magnetic recording medium reading device having a function of preventing illicit acquisition of data.

### BACKGROUND ART

A card reader for reading a magnetic card is mounted on a transaction processing device such as an ATM (Automated Teller Machine) or a CD (Cash Dispenser). In such transaction processing devices, crimes called skimming have occurred recently. In the skimming, data recorded in a magnetic stripe on a card is illicitly acquired when the card is inserted into the card reader.

Skimming can be broadly classified into two types. In one of the two types, an illicit reading device having a magnetic head is disposed to cover a card insertion slot of a card reader provided in an ATM or CD and data on a magnetic card inserted into the card reader is illicitly acquired (hereafter referred to as "first type"). In the other of the two types, an illicit reading device is connected to a magnetic stripe detection unit including a magnetic head for magnetic stripe detection disposed near a card insertion slot via a lead, and a signal which is output from the magnetic stripe detection unit (data read by the magnetic head) is acquired illicitly via the lead (hereafter referred to as "second type").

Against the skimming described above, various countermeasures have been proposed until now. For example, in Patent Literature 1 stated later, a card reader having a disturbing magnetic field generator provided near a card insertion slot is described. In this card reader, the disturbing magnetic field generator generates a disturbing magnetic field in an outside area of the card insertion slot. Even if an illicit reading device is attached to outside of the card insertion slot, therefore, data read by the illicit reading device is affected by the disturbing magnetic field and becomes data different from original data. As a result, it is possible to prevent data on the card from being acquired illicitly.

Furthermore, in Patent Literature 2 stated later, a card reader having a loop antenna for generating a disturbing magnetic field provided around a card insertion slot is stated. An antenna face of the loop antenna is in parallel with a front face of the card insertion slot. In this card reader as well, the disturbing magnetic field is generated in an outside area of the card insertion slot. Even if an illicit reading device is attached outside of the card insertion slot, therefore, it is possible to prevent data on a card from being acquired illicitly.

Furthermore, in Patent Literature 3 stated later, a card reader having a pre-head disposed near a card insertion slot to detect a magnetic stripe on a card and output a signal different from magnetic information recorded in the magnetic stripe is stated. Even if an illicit reading device is attached to the pre-head via a lead, a signal that is output from the pre-head is a signal different from information recorded on a card. In this card reader, therefore, it is possible to data on a card from being acquired illicitly.

### CITATION LIST

### PATENT LITERATURE

PATENT LITERATURE 1: JP-A-2001-67524
PATENT LITERATURE 2: JP-B-4425674
PATENT LITERATURE 3: JP-A-2010-205187
PATENT LITERATURE 4: DE 10 2010 000 102 A1

### SUMMARY OF INVENTION

### TECHNICAL PROBLEM

Patent literature 4 describes a machine which has an interference signal generating unit for generating an interference signal by which an electromagnetic interference field is formed in a region of a card slot, so that a total signal, which comprises interference signal, is read in a reading unit of a card reader.

The card reader stated in Patent Literature 1 is effective to skimming of the first type using an illicit reading device attached to outside of a card insertion slot because a disturbing magnetic field is generated in the outside area of the card insertion slot. As for this card reader, however, there is a fear that data will be acquired illicitly in a case where skimming of the second type is conducted by attaching an illicit reading device to the magnetic stripe detection unit via a lead.

The card reader stated in Patent Literature 2 is also effective to the skimming of the first type because a disturbing magnetic field is generated in an outside area of the card insertion slot. In this card reader, however, a countermeasure against the skimming of the second type is not considered.

The card reader in Patent Literature 3 is effective to skimming of the second type because a signal which is output from the pre-head is a signal different from information recorded on the card. In this card reader, however, a signal conversion means for converting a signal read by a head part in the pre-head to a signal different from the read signal is required, resulting in a complicated configuration. Furthermore, a countermeasure is not taken for the skimming of the first type. There is a fear that data will be acquired illicitly by an illicit reading device attached to outside of the card insertion slot.

Therefore, an object of the present invention is to provide a magnetic recording medium reading device capable of effectively preventing illicit acquisition of data both for the skimming of the first type and the skimming of the second type.

### SOLUTION TO PROBLEM

The above object is solved by the invention according to the appended claims.

By doing so, the magnetic field generation unit provided near the insertion slot always generates a disturbing magnetic field. Even if an illicit reading device having a magnetic head is attached to the insertion slot, therefore, the disturbing magnetic field acts on the magnetic head without fail. As a result, illicit acquisition of magnetic data using the illicit reading device becomes impossible and the skimming of the first type can be prevented. Furthermore, the disturbing magnetic field generated by the magnetic field generation unit always acts on the magnetic head for magnetic stripe detection. Even if a lead is connected to the magnetic stripe detection unit, therefore, it becomes impossible to acquire magnetic data and the skimming of the second type can also be prevented effectively. On the other hand, since the disturbing magnetic field acts on the magnetic field for magnetic stripe detection, it becomes impossible to obtain the regular magnetic stripe detection signal. In the present invention, it is possible to detect whether there is data on the magnetic recording medium by utilizing that the pattern of the detection signal before magnetic stripe detection differs from the pattern of the detection signal after magnetic stripe detection.

In the present invention, a sensing means for sensing a magnetic recording medium inserted from the insertion slot before the magnetic head detects a magnetic stripe, and the decision means compares the first pattern for a determinate period obtained by going back from time when the sensing means senses the magnetic recording medium with the second pattern of the detection signal output from the magnetic stripe detection unit. The determinate period in this case may be a period immediately before the sensing means senses the magnetic recording medium.

Furthermore, instead of this, the decision means may compare the first pattern for a determinate period after time when the sensing means senses the magnetic recording medium with the second pattern of the detection signal output from the magnetic stripe detection unit. The determinate period in this case is a period immediately after the sensing means senses the magnetic recording medium.

In the present invention, the decision means may sample the detection signal before the magnetic head detects the magnetic stripe and recognize sum total of sampling values for a predetermined period as the first pattern, and sample the detection signal obtained after the magnetic head detects the magnetic stripe and recognize sum total of sampling values for a predetermined period as the second pattern.

In the present invention, the decision means may sample the detection signal before the magnetic head detects the magnetic stripe and recognize an average value of sum totals of sampling values for respective periods of a plurality of predetermined periods as the first pattern, and sample the detection signal obtained after the magnetic head detects the magnetic stripe and recognize an average value of sum totals of sampling values for respective periods of a plurality of predetermined periods as the second pattern.

### ADVANTAGEOUS EFFECTS OF INVENTION

According to the present invention, the magnetic field generation unit always generates a disturbing magnetic field. Therefore, it is possible to effectively prevent illicit acquisition of data both for the skimming of the first type using an illicit reading device attached to the insertion slot and the skimming of the second type using an illicit reading device attached to the magnetic stripe detection unit via a lead. Furthermore, even if the disturbing magnetic field acts upon the magnetic head for detecting a magnetic stripe, it is possible to detect whether there is data on a magnetic recording medium without hindrance by utilizing that the pattern of the detected signal after detection of the magnetic stripe differs from that before detection of the magnetic stripe.

### BRIEF DESCRIPTION OF DRAWINGS

FIG. 1 is a block diagram showing an electric configuration of a card reader according to an embodiment of the present invention;
FIG. 2 is a side sectional view and a front view of the card reader;
FIG. 3 is a front view showing another example of a loop antenna;
FIG. 4 is a plane view of a magnetic card;
FIG. 5 is a waveform diagram for explaining an example useful for the understanding of the present invention;
FIG. 6 is a diagram showing a waveform of a reference pattern;
FIG. 7 is a flow chart showing an operation conducted when a card is inserted in the example useful for the understanding of the present invention;
FIG. 8 is a flow chart showing an operation conducted when a card is returned in the example useful for the understanding of the present invention;
FIG. 9 is a waveform diagram for explaining a first embodiment;
FIG. 10 is a plane view for explaining timing of card insertion detection and timing of magnetic stripe detection;
FIG. 11 is a flow chart showing an operation conducted when a card is inserted in the first embodiment;
FIG. 12 is a waveform diagram for explaining a second embodiment;
FIG. 13 is a flow chart showing an operation conducted when a card is inserted in the second embodiment;
FIG. 14 is a waveform diagram for explaining a third embodiment;
FIG. 15 is a flow chart showing an operation conducted when a card is inserted in the third embodiment;
FIG. 16 is a waveform diagram for explaining a fourth embodiment; and
FIG. 17 is a flow chart showing an operation conducted when a card is inserted in the fourth embodiment.

### DESCRIPTION OF AN EXAMPLE AND EMBODIMENTS

Hereafter, embodiments of the present invention will be described with reference to the drawings. Throughout the drawings, the same reference character denotes a like part or a corresponding part.

### (Example useful for the understanding of the present invention)

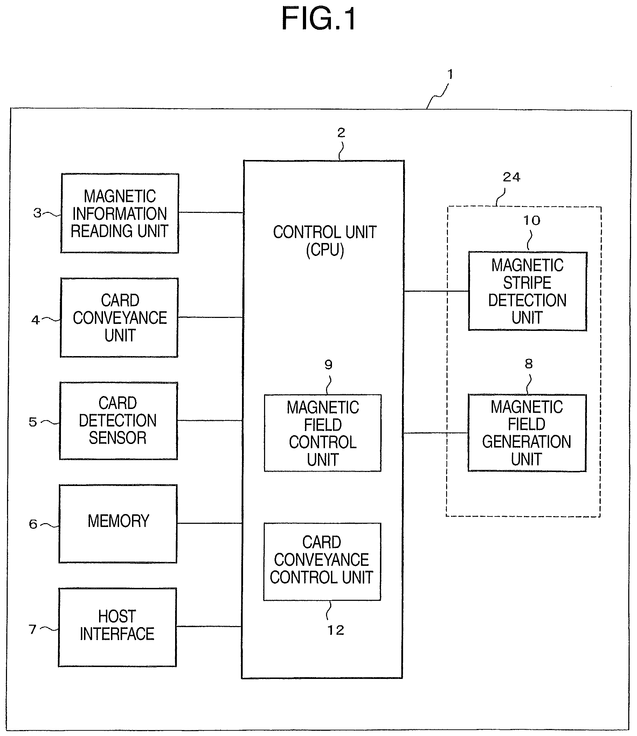

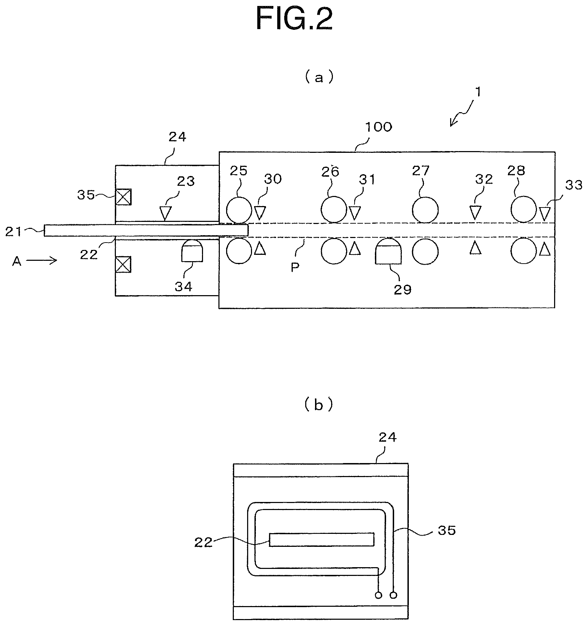

First, a configuration of a card reader according to an example useful for the understanding of the present invention will now be described with reference to FIG. 1 and FIG. 2.

As shown in FIG. 1, a card reader 1 according to the present example includes a control unit 2 formed of a CPU for controlling operation of the whole device, a magnetic information reading unit 3 for reading magnetic data recorded on a magnetic card, a card conveyance unit 4 for conveying a magnetic card, a card detection sensor 5 for detecting a magnetic card, a memory 6 for storing magnetic data read by the magnetic information reading unit 3, a host interface 7 which is a connection unit to an upper device (for example, an ATM), a magnetic stripe detection unit 10 for detecting a magnetic stripe on a magnetic card, and a magnetic field generation unit 8 for generating a disturbing magnetic field that prevents data recorded in the magnetic stripe from being read. The control unit 2 is an example of a "decision means" in the present invention.

The control unit 2 includes a magnetic field control unit 9 for controlling the magnetic field generation unit 8, and a card conveyance control unit 12 for controlling the card conveyance unit 4. The magnetic stripe detection unit 10 and the magnetic field generation unit 8 are installed in a card insertion slot unit 24. The magnetic stripe detection unit 10 includes a magnetic head 34 (FIG. 2) described later. Furthermore, the magnetic field generation unit 8 includes a loop antenna 35 (FIG. 2) described later.

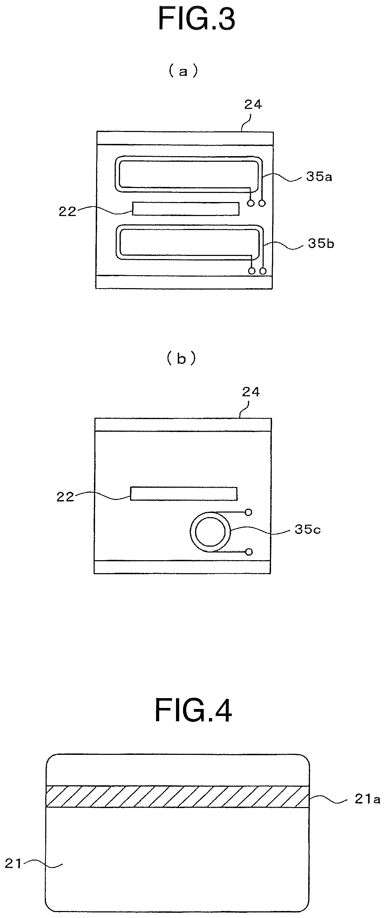

As shown in FIG. 2(a), the card insertion slot unit 24 is provided in front of a case 100 of the card reader 1. An insertion slot 22 is formed in the card insertion slot unit 24 to insert a magnetic card (hereafter referred to simply as "card") 21 therein. The card 21 has a magnetic stripe 21a as shown in FIG. 4. FIG. 4 is a view obtained by watching the card 21 from the back. A card insertion detection sensor 23 is provided near the insertion slot 22. The card insertion detection sensor 23 includes, for example, a micro-switch disposed in a location pressed by the card 21 inserted from the insertion slot 22. The card insertion detection sensor 23 is an example of a "sensing means" in the present invention. Furthermore, a magnetic head 34 for detecting a magnetic stripe is provided near the insertion slot 22. The magnetic head 34 detects the magnetic stripe 21a on the card 21.

Conveyance rollers 25 to 28, card location detection sensors 30 to 33, and a magnetic head 29 are provided within the case 100 of the card reader 1. As for each of the conveyance rollers 25 to 28, rollers of one pair are provided with a conveyance path P between. One pair of rollers sandwiches and conveys the card 21. These conveyance rollers 25 to 28 are coupled to a motor (not illustrated) via conveyance belts (not illustrated). One of the conveyance rollers of one pair is a drive roller to which revolution power of the motor is transmitted, whereas the other is a driven roller driven by the drive roller to rotate. The conveyance rollers 25 to 28 constitute the card conveyance unit 4 (FIG. 1) together with the conveyance belts and the motor.

The card location detection sensors 30 to 33 are transmission type optical sensors. Each of the card location detection sensors 30 to 33 has a light emission unit and a light sensing unit opposed to each other with the conveyance path P between. Disposition intervals between these sensors 30 to 33 are shorter than a length of the magnetic card 21 in the conveyance direction. The sensor 30 detects that the card 21 is sandwiched between the conveyance rollers 25 disposed nearest the insertion slot 22. The sensor 33 detects that the inserted card 21 has reached a retention unit (not illustrated) which retains a card temporarily. The sensors 31 and 32 detect the location of the card 21 during the conveyance. These card location detection sensors 30 to 33 constitute the card detection sensor 5 (FIG. 1) together with the above-described card insertion detection sensor 23.

The magnetic head 29 is provided under the conveyance path P between the conveyance roller 26 and the conveyance roller 27. The magnetic head 29 reads data recorded in the magnetic stripe 21a on the card 21 in a process in which the inserted card 21 is conveyed on the conveyance path P. Whereas the above-described magnetic head 34 is a magnetic head for detecting whether there is data recorded in the magnetic stripe, the magnetic head 29 is a magnetic head for reproducing data itself recorded in the magnetic stripe. An interval between the magnetic head 29 and the sensor 33 is made slightly longer than a length of the card 21 in the conveyance direction. When the card 21 reaches the retention unit, i.e., when a tip of the card 21 reaches the location of the sensor 33, therefore, the magnetic head 29 has already completed reading of data recorded on the card 21.

The loop antenna 35 is provided near a front face of the card insertion slot unit 24. In the vicinity of the insertion slot 22, the loop antenna 35 is provided on the insertion slot 22 side as compared with the magnetic head 34 for magnetic stripe detection in an insertion direction A of the card 21 as appreciated from FIG. 2(a). This loop antenna 35 is an antenna formed by winding a conductor in a loop form by one turn or a plurality of turns, and the loop antenna is disposed so as to surround the insertion slot 22 as shown in FIG. 2(b).

When the magnetic field generation unit 8 lets a drive current flow through the loop antenna 35 on the basis of control from the magnetic field control unit 9, the loop antenna 35 generates a magnetic field near the insertion slot 22. Since in the present invention the drive current is let flow through the loop antenna 35 continuously, the loop antenna 35 always generates the magnetic field. This magnetic field acts as a disturbing magnetic field in front of the insertion slot 22. In a case where an illicit reading device (not illustrated) is attached in front of the insertion slot 22, the magnetic field disturbs magnetic information reading of the illicit reading device. Furthermore, this magnetic field also acts as a disturbing magnetic field for the magnetic head 34 for magnetic stripe detection disposed behind the insertion slot 22 and disturbs illicit magnetic information reading at the magnetic head 34.

By the way, two independent loop antennas 35a and 35b may be disposed on both sides of the insertion slot 22 as shown in FIG. 3(a) instead of the loop antenna 35 shown in FIG. 2(b). Or as shown in FIG. 3(b), one loop antenna 35c may be disposed only in the vicinity of the magnetic head 34 for magnetic stripe detection (FIG. 2(a)).

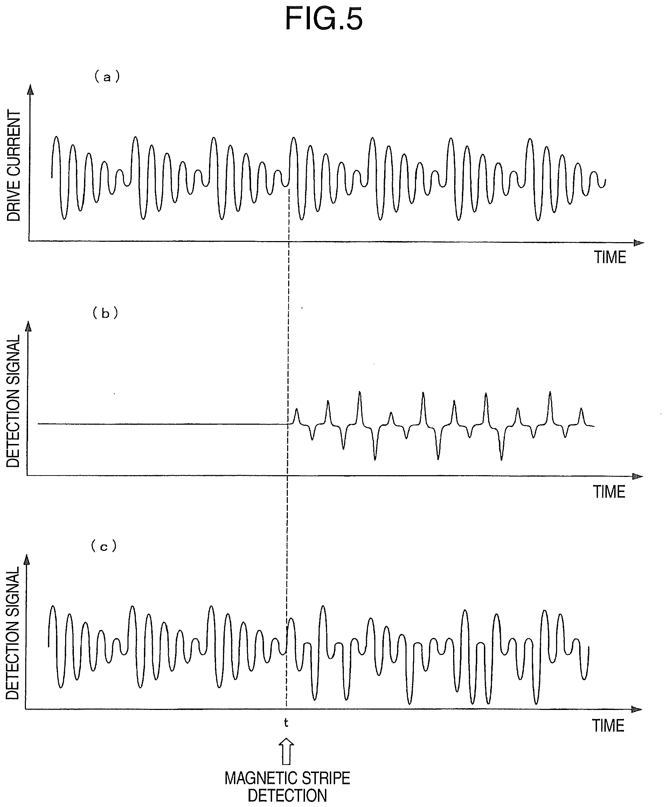

A countermeasure against skimming in the example will now be described. FIG. 5(a) shows a waveform of the drive current flowing through the loop antenna 35. FIG. 5(b) shows a waveform of a detection signal which is output from the magnetic stripe detection unit 10 in a case where the disturbing magnetic field does not exist. After time t when the magnetic head 34 detects the magnetic stripe 21a (FIG. 4), the magnetic stripe detection unit 10 outputs a pulse shaped detection signal as illustrated on the basis of magnetic data read from the magnetic stripe 21a by the magnetic head 34. FIG. 5(c) shows a waveform of the detection signal which is output from the magnetic stripe detection unit 10 in a case where the disturbing magnetic field exists. Before the time t, only the disturbing magnetic field acts on the magnetic head 34, and consequently the waveform of the detection signal becomes the waveform corresponding to the disturbing magnetic field shown in FIG. 5(a). After the time t, the disturbing magnetic field and a magnetic field generated by the magnetic data in the magnetic stripe 21a act on the magnetic head 34, and consequently the waveform of the detection signal becomes a waveform obtained by combining FIG. 5(a) with FIG. 5(b).

In the present example, the loop antenna 35 always generates the disturbing magnetic field as shown in FIG. 5(a). In addition, the disturbing magnetic field acts forward and backward at the insertion slot 22. Even if an illicit reading device having a magnetic head is attached in the front of the insertion slot 22, therefore, the disturbing magnetic field acts on the magnetic head without fail. As a result, it becomes impossible to illicitly acquire the magnetic data on the card 21 by utilizing a suspension period of the disturbing magnetic field, and the skimming of the first type can be prevented. Furthermore, since the disturbing magnetic field always acts on the magnetic head 34 as well, it also becomes impossible to acquire magnetic data illicitly from the magnetic head 34 via a lead. As a result, it also becomes possible to prevent the skimming of the second type effectively.

On the other hand, since the disturbing magnetic field generated by the loop antenna 35 always act on the magnetic head 34, it becomes impossible to obtain a regular magnetic stripe detection signal shown on the right side of FIG. 5(b) from the magnetic head 34 when the magnetic head 34 reads the magnetic stripe 21a. However, it suffices that the magnetic head 34 can detect whether there is magnetic data in the magnetic stripe 21a, and it is not necessary for the magnetic head 24 to reproduce the magnetic data itself. In the present example, therefore, it is detected whether there is magnetic data in the magnetic stripe 21a by utilizing the fact that a pattern of the detection signal before magnetic stripe detection differs from the pattern of the detection signal after the magnetic stripe detection. Hereafter, this will be described.

Comparing the pattern (hereafter referred to as "first pattern") of the detection signal before the magnetic head 34 detects the magnetic stripe 21a (before the time t) with the pattern (hereafter referred to as "second pattern") of the detection signal after the magnetic head 34 detects the magnetic stripe 21a (before the time t), the patterns differ from each other as appreciated from FIG. 5(c). In other words, in a case where the card 21 having data recorded in the magnetic stripe 21a is inserted, the magnetic head 34 reads the data and consequently the pattern of the detection signal changes from the first pattern to the second pattern. On the other hand, in a case where the card 21 having no data recorded in the magnetic stripe 21a is inserted, the signal shown in FIG. 5(b) is not generated and consequently the pattern of the detection signal remains the first pattern and does not change. As appreciated from the foregoing description, it is possible to detect whether there is data in the magnetic stripe 21a by comparing the first pattern with the second pattern. As a result, it becomes possible to determine whether the card 21 having data recorded in the magnetic stripe 21a is inserted.

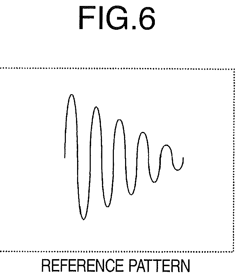

By the way, in the example, the above-described first pattern is previously stored in the memory 6 (FIG. 1) as a reference pattern as shown in FIG. 6. And the detection signal which is output from the magnetic stripe detection unit 10 after the time t in FIG. 5(c) is analyzed. The pattern of the detection signal (the second pattern) is collated with the reference pattern, and it is validated whether the pattern of the detection signal coincides with the reference pattern. The pattern collation can be conducted by, for example, successively comparing sampling values of the respective patterns with each other.

In this way, in the first embodiment, it is possible to effectively prevent illicit acquisition of data on the card 21 against both the skimming of the first type and the skimming of the second type, by the disturbing magnetic field generated always by the loop antenna 35. Furthermore, even if the disturbing magnetic field acts on the magnetic head 34, it is possible to detect whether there is data on the card 21 without hindrance by utilizing that the pattern of the detection signal after detection of the magnetic stripe 21a differs from that before detection of the magnetic stripe 21a.

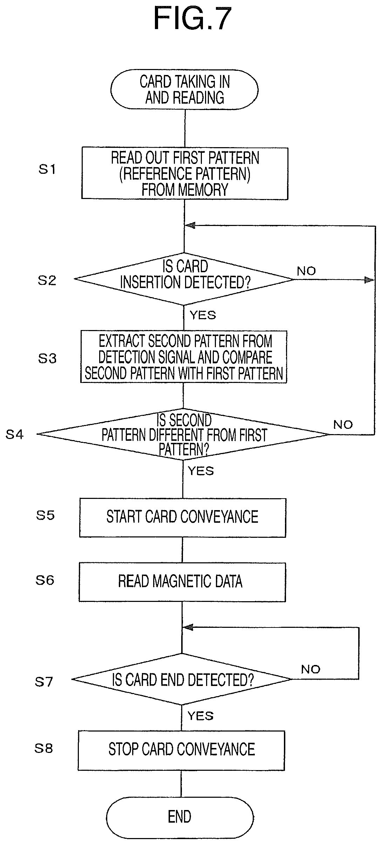

FIG. 7 is a flow chart showing an operation conducted when the card is inserted in the example. Hereafter, a procedure conducted when taking in and reading the card 21 will be described in detail with reference to the flow chart. Processing at each step is executed by the control unit 2.

At step S1, the first pattern (the reference pattern shown in FIG. 6) is read out from the memory 6. At step S2, it is determined whether the card insertion detection sensor 23 has detected insertion of the card 21. Unless insertion of the card 21 is detected (step S2; NO), the step S2 is executed repeatedly and detection of insertion of the card 21 is waited for. If insertion of the card 21 is detected (step S2; YES), the processing proceeds to step S3.

At step S3, the second pattern is extracted from the detection signal of the magnetic stripe detection unit 10 and compared with the first pattern (the reference pattern) read out at the step S1. And at step S4, it is determined whether the second pattern differs from the first pattern.

In a case where the second pattern differs from the first pattern as a result of decision at the step S4 (step S4; YES), then "there is data" in the magnetic stripe 21a and consequently the card 21 having data recorded in the magnetic stripe 21a is judged to be inserted, and the processing proceeds to step S5. On the other hand, if the second pattern is the same as the first pattern as a result of decision at the step S4, that is, the second pattern does not change from the first pattern (step S4; NO), then "there is no data" in the magnetic stripe 21a and consequently the card 21 having no data recorded in the magnetic stripe 21a is judged to be inserted, and the card 21 is returned and the processing returns to the step S2.

At step S5, the card conveyance control unit 12 starts conveyance of the card 21. At this time, the conveyance rollers 25 to 28 rotates in a direction of taking the inserted card 21 into the case 100 (hereafter referred to as "positive direction"). As a result, the card 21 is passed through the conveyance path P and taken into the case 100. In a process of conveying the card 21 on the conveyance path P, magnetic data recorded in the magnetic stripe 21a on the card 21 is read by the magnetic head 29 at step S6.

At step S7, it is determined whether the sensor 33 disposed to be adjacent to the conveyance roller 28 has detected an end (a right end in FIG. 2(a)) of the card 21. Unless the sensor 33 has detected an end of the card 21 (step S7; NO), the step S7 is executed repeatedly. In other words, the conveyance rollers 25 to 28 are rotated in the positive direction and the conveyance of the card 21 is continued until the card end is detected. If the sensor 33 has detected the card end (step S7; YES), the card 21 is judged to have reached the rear end of the conveyance path P and the processing proceeds to step S8.

At step S8, the card conveyance control unit 12 stops the rotation of the conveyance rollers 25 to 28 and stops the conveyance of the card 21. At this time, the card 21 is retained in the retention unit described above (not illustrated) temporarily. All of the series of processing shown in FIG. 7 is finished in this way.

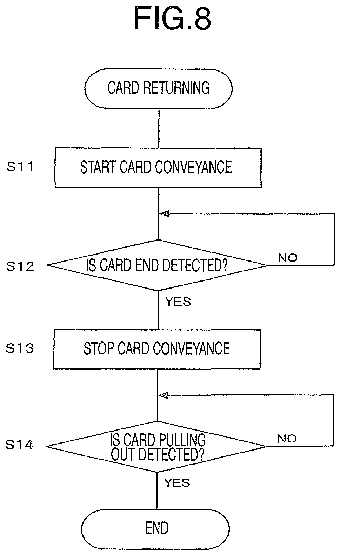

FIG. 8 shows a procedure conducted when returning the card 21. Processing at each step is executed by the control unit 2.

At step S11, the card conveyance control unit 12 starts conveyance of the card 21. At this time, the conveyance rollers 25 to 28 rotate in a direction of conveying the inserted card 21 from the retention unit to the insertion slot 22 (hereafter referred to as "opposite direction"). As a result, the card 21 is conveyed on the conveyance path P toward the insertion slot 22.

At step S12, it is determined whether the sensor 30 disposed to be adjacent to the conveyance roller 25 has detected an end (the right end in FIG. 2(a)) of the card 21. Unless the sensor 30 has detected the card end (step S12; NO), the step S12 is executed repeatedly. In other words, the conveyance rollers are rotated in the opposite direction and the conveyance of the card 21 is continued until the card end is detected. If the sensor 30 detects the card end (step S12;YES), the conveyed card 21 is judged to be returned to the insertion slot 22 and the processing proceeds to step S13.

At the step 13, the card conveyance control unit 12 stops the rotation of the conveyance rollers 25 to 28 and the conveyance of the card 21 stops. At this time, the card 21 is sandwiched between the upper and lower conveyance rollers 25 as shown in FIG. 2(a) and a tip part of the card projects from the insertion slot 22 to the outside. As a result, a user can grasp the tip part of the card 21 projected from the insertion slot 22 and pull out the card 21.

At step S14, it is determined whether the card insertion detection sensor 23 has detected pulling out of the card 21. When the card insertion detection unit 23 is in a state of detecting the card, the card 21 is judged not to be pulled out (step S14; NO) and the step S14 is executed repeatedly to wait for pulling out of the card 21. If the card insertion detection unit 23 changes from the state of detecting card to a state in which the card is not detected, the card 21 is judged to be pulled out (step S14; YES) and the processing is finished. In this way, all of the series of processing shown in FIG. 8 is finished.

### (First embodiment)

A first embodiment of the present invention will now be described. By the way, a configuration of a card reader in the first embodiment is the same as that shown in FIG. 1 and FIG. 2 and consequently its description will be omitted.

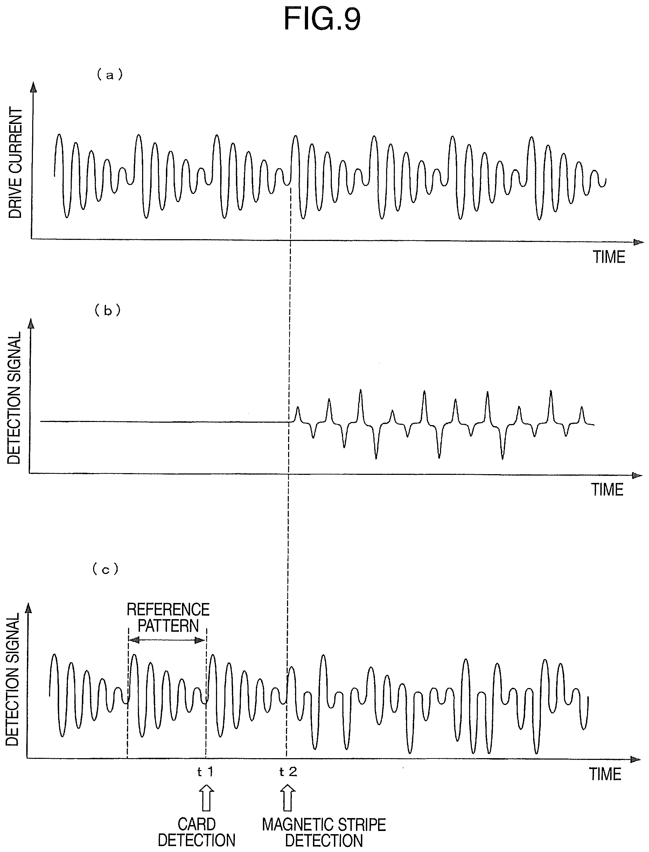

In the example, the first pattern (the reference pattern) is previously stored in the memory 6. On the other hand, in the first embodiment, the first pattern is acquired from the actual detection signal and it is used as the reference pattern. Hereafter, the first embodiment will be described specifically with reference to FIG. 9.

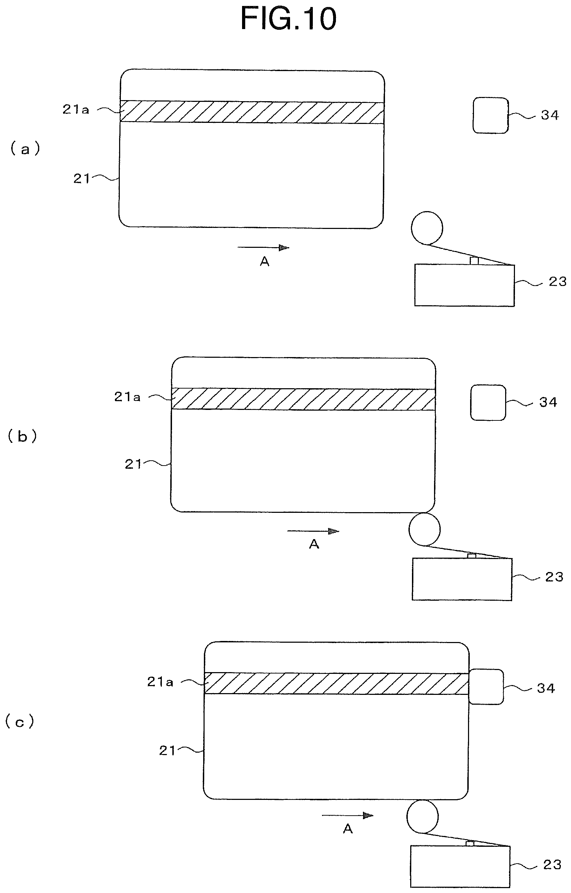

Waveforms shown in FIG. 9 are the same as the waveforms shown in FIG, 5. In FIG. 9(c), t1 represents time when the card insertion detection sensor 23 has detected the card 21, and t2 represents time when the magnetic head 34 has detected the magnetic stripe 21a. In other words, the card 21 is inserted in an A direction as shown in FIG. 10(a). First, the card insertion detection sensor 23 (micro-switch) detects the card 21 as shown in FIG. 10(b). This time is t1 in FIG. 9(c). Then, the card 21 is further inserted in the A direction. The magnetic head 34 begins to read the magnetic stripe 21a as shown in FIG. 10(c). This time is t2 in FIG. 9(c).

In the first embodiment, the detection signal for a determinate period immediately preceding the time t1 when the card 21 is detected is extracted as the reference pattern (the first pattern) as shown in FIG. 9(c). The extracted reference pattern is temporarily stored in the memory 6. And the detection signal which is output from the magnetic stripe detection unit 10 after the time t2 when the magnetic stripe 21a is detected is analyzed. Collation of the pattern (the second pattern) of the detection signal with the reference pattern is conducted, and verification whether the pattern of the detection signal coincides with the reference pattern is conducted. The pattern collation can be conducted by, for example, successively comparing sampling values of respective patterns with each other.

In the case of the first embodiment as well, it is possible to effectively prevent illicit acquisition of data on the card 21 for both the skimming of the first type and the skimming of the second type by the disturbing magnetic field generated always by the loop antenna 35, in the same way as the example. Furthermore, even if the disturbing magnetic field acts on the magnetic head 34, it is possible to detect whether there is data on the card 21 without hindrance by utilizing that the pattern of the detection signal after detection of the magnetic stripe 21a differs from that before detection of the magnetic stripe 21a.

Furthermore, in the first embodiment, the reference pattern (the first pattern) is acquired from the actual detection signal immediately preceding the detection of the card 21. Therefore, a reference pattern with changes in the environment such as the temperature and external noise reflected can be generated. As compared with the case where the fixed reference pattern is used as in the example, therefore, the precision of the reference pattern is improved and the precision of the detection whether there is data on the card 21 is improved.

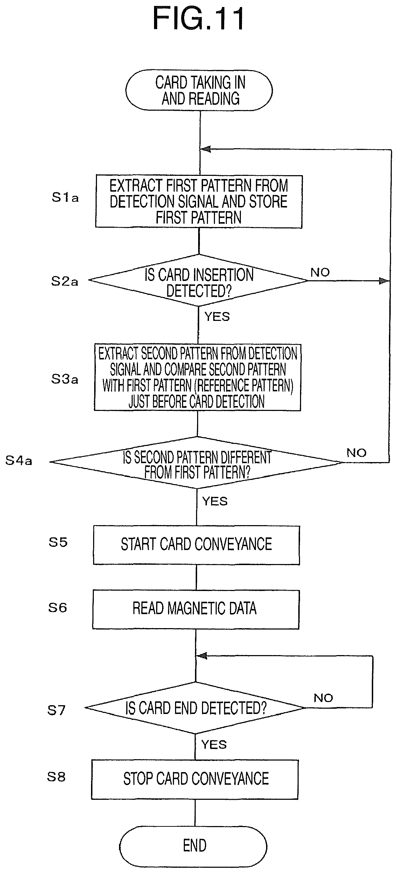

FIG. 11 is a flow chart showing an operation conducted when the card is inserted in the first embodiment. Processing at each step is conducted by the control unit 2.

At step S1a, the first pattern is extracted from the detection signal of the magnetic stripe detection unit 10 for a predetermined period, and the extracted first pattern is stored in the memory 6.

At step S2a, it is determined whether the card insertion detection sensor 23 has detected insertion of the card 21. Unless insertion of the card 21 is detected (step S2a; NO), the processing returns to the step S1a and extraction and storage of the first pattern are conducted for the next period. In this case, the first pattern is overwritten and updated in the memory 6. Until insertion of the card 21 is detected, the steps S1a and S2a are executed repeatedly. And if insertion of the card 21 is detected (step S2a; YES), the processing proceeds to step S3a.

At the step S3a, the second pattern is extracted from the detection signal of the magnetic stripe detection unit 10, and compared with the first pattern (the reference pattern) immediately preceding the card detection stored in the memory 6. And at step S4a, it is determined whether the second pattern differs from the first pattern.

In a case where the second pattern differs from the first pattern as a result of the decision at the step S4a (step S4a; YES), "there is data" in the magnetic stripe 21a and consequently the card 21 having data recorded in the magnetic stripe 21a is judged to be inserted and the processing proceeds to step S5. On the other hand, in a case where the second pattern is the same as the first pattern as a result of the decision at the step S4a, i.e., there is no change from the first pattern (step S4a; NO), "there is no data" in the magnetic stripe 21a and consequently the card 21 having no data recorded in the magnetic stripe 21a is judged to be inserted, and the card 21 is returned and then the processing returns to the step S1a.

At the step S5, the card conveyance control unit 12 starts conveyance of the card 21. Since procedures at steps S5 to S8 are the same as those at the steps S5 to S8 in FIG. 7, description of them will be omitted. Furthermore, since a procedure in a case where the card 21 is returned is the same as that in FIG. 8, description thereof will also be omitted.

, In the above-described first embodiment, the detection signal for a determinate period immediately preceding the card detection is extracted as the reference pattern (the first pattern) as shown in FIG. 9(c). Instead of this, the detection signal for a period before the determinate period immediately preceding the card detection may be extracted as the reference pattern. Furthermore, instead of extracting the reference pattern from one period, an average of patterns extracted from a plurality of periods may be used as the reference pattern. In short, the reference pattern may be set on the basis of a pattern for an arbitrary determinate period obtained by going back from the card detection time. In addition, the reference pattern may be set by using a part of a signal contained in a determinate period instead of the whole of signal.

### (Second embodiment)

A second embodiment of the present invention will now be described. By the way, a configuration of a card reader in the second embodiment is the same as that shown in FIG. 1 and FIG. 2 and consequently its description will be omitted.

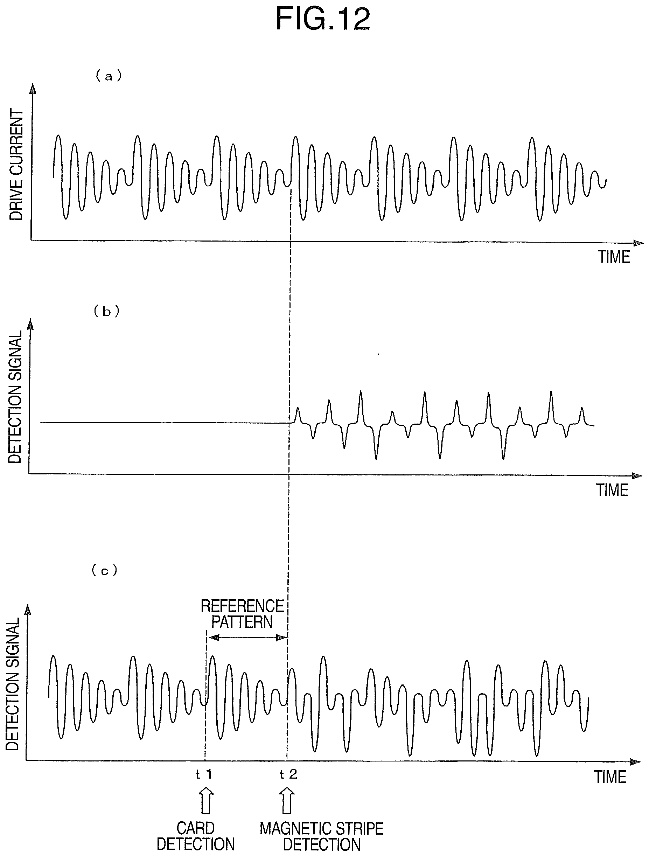

In the second embodiment, the first pattern is acquired from the actual detection signal and used as the reference pattern in the same way as the first embodiment. However, the detection signal for a determinate period immediately preceding the card detection is used as the reference pattern in the case of the first embodiment, whereas the detection signal for a determinate period immediately after the time t1 when the card 21 is detected is extracted as the reference pattern (the first pattern) as shown in FIG. 12(c) in the case of the second embodiment.

The extracted reference pattern is temporarily stored in the memory 6. And the detection signal which is output from the magnetic stripe detection unit 10 after the time t2 when the magnetic stripe 21a is detected is analyzed. Collation of the pattern (the second pattern) of the detection signal with the reference pattern is conducted, and verification whether the pattern of the detection signal coincides with the reference pattern is conducted. The pattern collation can be conducted by, for example, successively comparing sampling values of respective patterns with each other.

In the case of the second embodiment as well, it is possible to effectively prevent illicit acquisition of data on the card 21 for both the skimming of the first type and the skimming of the second type by the disturbing magnetic field generated always by the loop antenna 35, in the same way as the example. Furthermore, even if the disturbing magnetic field acts on the magnetic head 34, it is possible to detect whether there is data on the card 21 without hindrance by utilizing that the pattern of the detection signal after detection of the magnetic stripe 21a differs from that before detection of the magnetic stripe 21a.

Furthermore, in the second embodiment, the reference pattern (the first pattern) is acquired from the actual detection signal immediately after the detection of the card 21. Therefore, a reference pattern with changes in the environment such as the temperature and external noise reflected can be generated. In the same way as the first embodiment, therefore, the precision of the reference pattern is improved and the precision of the detection whether there is data on the card 21 is improved.

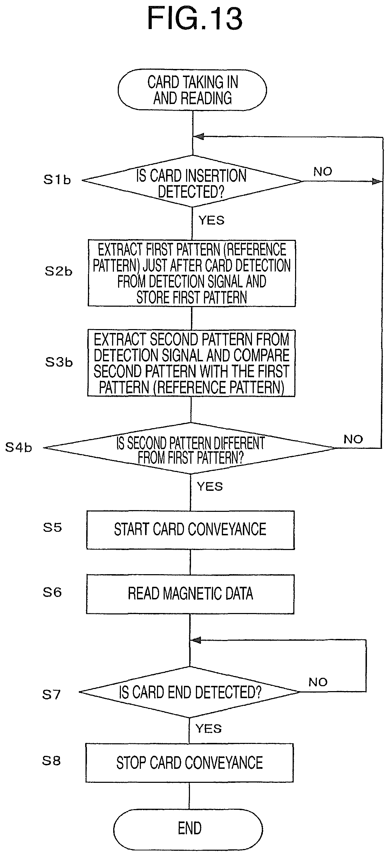

FIG. 13 is a flow chart showing an operation conducted when the card is inserted in the second embodiment. Processing at each step is conducted by the control unit 2.

At step S1b, it is determined whether the card insertion detection sensor 23 has detected insertion of the card 21. Unless insertion of the card 21 is detected (step S1b; NO), the step S1b is executed repeatedly and detection of insertion of the card 21 is waited for. If insertion of the card 21 is detected (step S1b; YES), the processing proceeds to step S2b.

At step S2b, the first pattern for a predetermined period immediately after card detection is extracted from the detection signal of the magnetic stripe detection unit 10 and stored in the memory 6 as the reference pattern.

At step S3b, the second pattern is extracted from the detection signal of the magnetic stripe detection unit 10 after detection of the magnetic stripe, and compared with the first pattern (reference pattern) stored in the memory 6. And at step S4b, it is determined whether the second pattern differs from the first pattern.

In a case where the second pattern differs from the first pattern as a result of the decision at the step S4b (step S4b; YES), "there is data" in the magnetic stripe 21a and consequently the card 21 having data recorded in the magnetic stripe 21a is judged to be inserted and the processing proceeds to step S5. On the other hand, in a case where the second pattern is the same as the first pattern as a result of the decision at the step S4b, i.e., there is no change from the first pattern (step S4b; NO), "there is no data" in the magnetic stripe 21a and consequently the card 21 having no data recorded in the magnetic stripe 21a is judged to be inserted, and the card 21 is returned and then the processing returns to the step S1b.

At the step S5, the card conveyance control unit 12 starts conveyance of the card 21. Since procedures at steps S5 to S8 are the same as those at the steps S5 to S8 in FIG. 7, description of them will be omitted. Furthermore, since a procedure in a case where the card 21 is returned is the same as that in FIG. 8, description thereof will also be omitted.

In the above-described second embodiment, the detection signal for a determinate period immediately after the card detection is extracted as the reference pattern (the first pattern) as shown in FIG. 12(c). Instead of this, the detection signal for a period after the determinate period immediately after the card detection, between the card detection time t1 and the magnetic stripe detection time t2 may be extracted as the reference pattern as long as there is time to spare between t1 and t2. Furthermore, instead of extracting the reference pattern from one period, an average of patterns extracted from a plurality of periods may be used as the reference pattern. In short, the reference pattern may be set on the basis of a pattern for an arbitrary determinate period after the card detection time. In addition, the reference pattern may be set by using a part of a signal contained for a determinate period instead of the whole of signal.

### (Third embodiment)

A third embodiment of the present invention will now be described. By the way, a configuration of a card reader in the third embodiment is the same as that shown in FIG. 1 and FIG. 2 and consequently its description will be omitted.

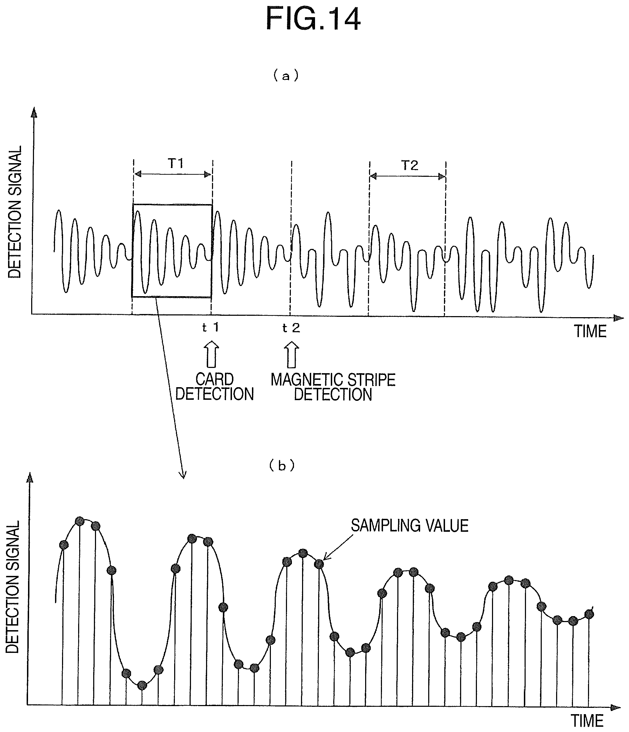

In the example and the first to second embodiments, collation of the first pattern (reference pattern) with the second pattern is conducted by comparing waveforms of the detection signals with each other. On the other hand, in the third embodiment, collation is conducted by comparing the sum totals of sampling values for a determinate period of the detection signals with each other. Hereafter, this will be described specifically with reference to FIG. 14.

A waveform shown in FIG. 14(a) is the same as the waveform shown in FIG. 9(c). FIG. 14(b) is a diagram schematically showing a state of sampling for a period T1 in FIG. 14(a). In the third embodiment, the detection signal before magnetic stripe detection is sampled and the sum total of sampling values for the determinate period T1 is calculated. And the sum total is stored in the memory 6 as the first pattern. Furthermore, the detection signal after the magnetic stripe detection time t2 is sampled (not illustrated) and the sum total of sampling values for a determinate period T2 is calculated. And the sum total is regarded as the second pattern.

In FIG. 14(a), the period T1 is a period immediately preceding the card detection time t1. However, the period T1 may be a period earlier than that. Furthermore, the period T2 may also be a period immediately after the magnetic stripe detection time t2, or may be a period later than the illustrated period. By the way, start time of the period T1 and start time of the period T2 are synchronized.

In a case where the card 21 having data recorded in the magnetic stripe 21a is inserted, the pattern of the detection signal before magnetic stripe detection differs from the pattern of the detection signal after magnetic stripe detection as described earlier. As a result, the sum total of sampling values of the detection signal for the period T1 also differs from that for the period T2. Therefore, it is possible to detect whether there is data in the magnetic stripe 21a by taking the sum totals for the period T1 and the period T2 as the first pattern and the second pattern and comparing them with each other.

In the case of the third embodiment as well, it is possible to effectively prevent illicit acquisition of data on the card 21 for both the skimming of the first type and the skimming of the second type by the disturbing magnetic field generated always by the loop antenna 35, in the same way as the example. Furthermore, even if the disturbing magnetic field acts on the magnetic head 34, it is possible to detect whether there is data on the card 21 without hindrance by utilizing that the pattern of the detection signal after detection of the magnetic stripe 21 a differs from that before detection of the magnetic stripe 21a.

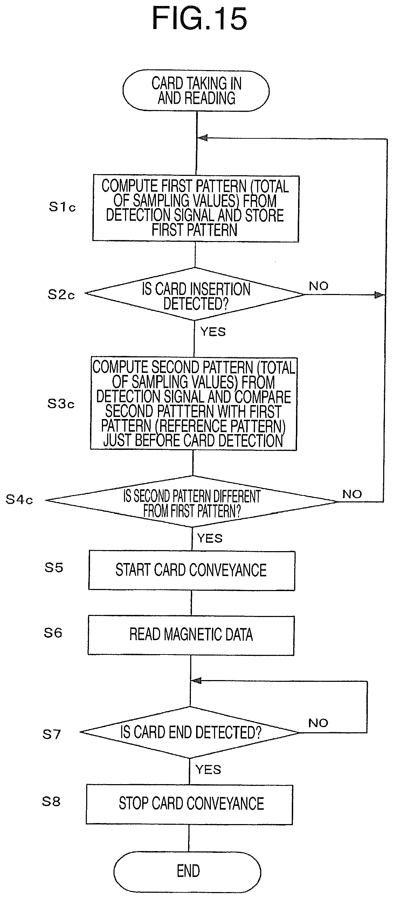

FIG. 15 is a flow chart showing an operation conducted when the card is inserted in the third embodiment. Processing at each step is executed by the control unit 2.

At step S1c, the first pattern (the sum total of sampling values for a predetermined period) is computed from the detection signal of the magnetic stripe detection unit 10 and stored in the memory 6.

At step S2c, it is determined whether the card insertion detection sensor 23 has detected insertion of the card 21. Unless insertion of the card 21 is detected (step S2c; NO), the processing returns to the step S1c and computation and storage of the first pattern are conducted for the next period. In this case, the first pattern is overwritten and updated in the memory 6. Until insertion of the card 21 is detected, the steps S1c and S2c are executed repeatedly. And if insertion of the card 21 is detected (step S2c; YES), the processing proceeds to step S3c.

At the step S3c, the second pattern (the sum total of sampling values) for the period T2 is computed from the detection signal of the magnetic stripe detection unit 10 after magnetic stripe detection, and compared with the reference pattern stored in the memory 6, i.e., the first pattern (the sum total of sampling values) for the period T1 immediately preceding the card detection. Subsequently, at step S4c, it is determined whether the second pattern differs from the first pattern.

In a case where the second pattern differs from the first pattern as a result of the decision at the step S4c (step S4c; YES), "there is data" in the magnetic stripe 21a and consequently the card 21 having data recorded in the magnetic stripe 21a is judged to be inserted and the processing proceeds to step S5. On the other hand, in a case where the second pattern is the same as the first pattern as a result of the decision at the step S4c, i.e., there is no change from the first pattern (step S4c; NO), "there is no data" in the magnetic stripe 21a and consequently the card 21 having no data recorded in the magnetic stripe 21a is judged to be inserted, and the card 21 is returned and then the processing returns to the step S1c.

At the step S5, the card conveyance control unit 12 starts conveyance of the card 21. Since procedures at steps S5 to S8 are the same as those at the steps S5 to S8 in FIG. 7, description of them will be omitted. Furthermore, since a procedure in a case where the card 21 is returned is the same as that in FIG. 8, description thereof will also be omitted.

### (Fourth embodiment)

A fourth embodiment of the present invention will now be described. By the way, a configuration of a card reader in the fourth embodiment is the same as that shown in FIG. 1 and FIG. 2 and consequently its description will be omitted.

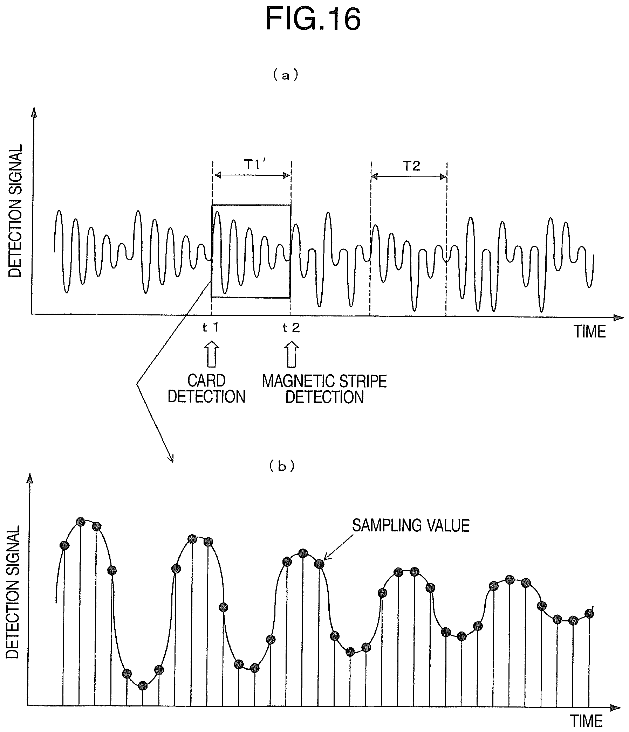

In the fourth embodiment, collation is conducted by comparing sum totals of sampling values of the detection signal for predetermined periods. In the case of the third embodiment, however, the sum total of sampling values for the predetermined period T1 immediately preceding the card detection is used as the reference pattern. On the other hand, in the case of the fourth embodiment, the sum total of sampling values for a predetermined period T1' immediately after the card detection is used as the reference pattern as shown in FIG. 16. As regards collation of patterns in the fourth embodiment is substantially the same as that in the third embodiment and consequently detailed description will be omitted.

In the case of the fourth embodiment as well, it is possible to effectively prevent illicit acquisition of data on the card 21 for both the skimming of the first type and the skimming of the second type by the disturbing magnetic field generated always by the loop antenna 35, in the same way as the example. Furthermore, even if the disturbing magnetic field acts on the magnetic head 34, it is possible to detect whether there is data on the card 21 without hindrance by utilizing that the sum total of sampling values of the detection signal after detection of the magnetic stripe 21a differs from that before detection of the magnetic stripe 21a.

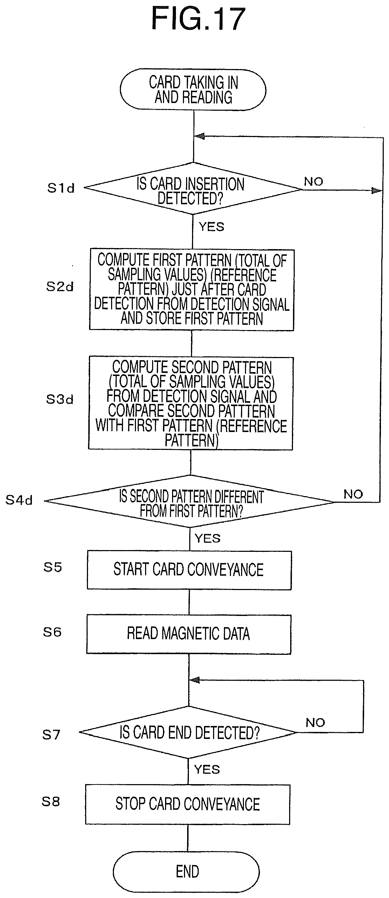

FIG. 17 is a flow chart showing an operation conducted when the card is inserted in the fourth embodiment. Processing at each step is executed by the control unit 2.

At step S1d, it is determined whether the card insertion detection sensor 23 has detected insertion of the card 21. Unless insertion of the card 21 is detected (step S1d; NO), the step S1d is executed repeatedly and insertion of the card 21 is waited for. And if insertion of the card 21 is detected (step S1d; YES), the processing proceeds to step S2d.

At the step S2d, the first pattern (the sum total of sampling values) for the period T1' immediately after the card detection is computed from the detection signal of the magnetic stripe detection unit 10 and stored in the memory 6 as the reference pattern.

At step S3d, the second pattern (the sum total of sampling values) for the period T2 is computed from the detection signal of the magnetic stripe detection unit 10 after magnetic stripe detection, and compared with the reference pattern stored in the memory 6, i.e., the first pattern (the sum total of sampling values) for the period T1'. Subsequently, at step S4d, it is determined whether the second pattern differs from the first pattern.

In a case where the second pattern differs from the first pattern as a result of the decision at the step S4d (step S4d; YES), "there is data" in the magnetic stripe 21a and consequently the card 21 having data recorded in the magnetic stripe 21a is judged to be inserted and the processing proceeds to step S5. On the other hand, in a case where the second pattern is the same as the first pattern as a result of the decision at the step S4d, i.e., there is no change from the first pattern (step S4d; NO), "there is no data" in the magnetic stripe 21a and consequently the card 21 having no data recorded in the magnetic stripe 21a is judged to be inserted, and the card 21 is returned and then the processing returns to the step S1d.

At the step S5, the card conveyance control unit 12 starts conveyance of the card 21. Since procedures at steps S5 to S8 are the same as those at the steps S5 to S8 in FIG. 7, description of them will be omitted. Furthermore, since a procedure in a case where the card 21 is returned is the same as that in FIG. 8, description thereof will also be omitted.

In the above-described third embodiment and fourth embodiment, the sum total of sampling values for one period is found. However, it is also possible to find the sum total of sampling values for each of a plurality of periods and find an average value of them. In this case, the detection signal before the magnetic stripe detection is sampled and an average value of the sum totals of sampling values in respective periods of a plurality of predetermined periods is regarded as the first pattern. The detection signal after the magnetic stripe detection is sampled and an average value of the sum totals of sampling values in respective periods of a plurality of predetermined periods is regarded as the second pattern. By doing so, the patterns are hardly affected by noise or the like and the precision of each pattern is improved. In addition, the sum total may be found by using a part not the whole of the signal contained for a determinate period.

In the example and the embodiments described heretofore, the skimming countermeasure in a case where the card 21 is inserted has been described. Since the loop antenna 35 always generates the disturbing magnetic field, however, it is also possible to prevent skimming in a case where the card 21 is returned.

In the example and the embodiments described heretofore, the skimming countermeasure for the magnetic head 34 for magnetic stripe detection has been described. On the other hand, the magnetic head 29 exists in the case 100 of the card reader 1 to read the magnetic stripe 21a and reproduce data (see FIG. 2(a)). As a skimming countermeasure for the magnetic head 29, for example, a countermeasure such as encryption of data read by the magnetic head 29 is taken.

Furthermore, in the example and the embodiments described heretofore, the loop antenna shown in FIG. 2 or FIG. 3 is taken as an example. However, the loop antenna is not restricted to them. For example, at least three loop antennas may be provided. In this case, a more intense disturbing magnetic field is generated, and consequently it is possible to prevent skimming more efficiently. Furthermore, disturbing magnetic fields having different frequencies may be generated from a plurality of loop antennas. By doing so, the disturbing magnetic fields acting upon an illicit reading device have a plurality of frequency components. As a result, it becomes difficult to remove the disturbing magnetic fields even if filtering processing is conducted.

Furthermore, it is possible to provide the magnetic field with directivity and generate a more intense magnetic field by disposing ferrite having high magnetic permeability or a metallic core such as an iron core in the loop antenna.

Furthermore, in the example and the embodiments described heretofore, a magnetic card having a magnetic stripe on the back is taken as an example of the magnetic recording medium. However, the present invention can be applied to a magnetic recording medium reading device that handles a magnetic card having a magnetic stripe on the surface or on both the surface and the back.

Furthermore, in the example and the embodiments described heretofore, a magnetic card is mentioned as an example of a magnetic recording medium. However, it is also possible to apply the present invention to a device that reads a magnetic recording medium such as a passbook having a magnetic stripe.

### INDUSTRIAL APPLICABILITY

It is possible to apply the present invention to whole devices that read a magnetic recording medium, such as a card reader and a passbook reader mounted on an automatic transaction processing device such as an ATM, or a card reader mounted on a card authentication terminal.

### REFERENCE SIGNS LIST

- 1:: Card reader
- 2:: Control unit
- 8:: Magnetic field generation unit
- 9:: Magnetic field control unit
- 10:: Magnetic stripe detection unit
- 21:: Magnetic card
- 21a:: Magnetic stripe
- 22:: Insertion slot
- 34:: Magnetic head
- 35:: Loop antenna

## Claims

1. A magnetic recording medium reading device comprising:
an insertion slot (22) into which a magnetic recording medium is inserted;
a magnetic stripe detection unit (10) including a magnetic head (34) for detecting a magnetic stripe (21a) on the magnetic recording medium;
a magnetic field generation unit (8) for generating a disturbing magnetic field to disturb reading of data recorded in the magnetic stripe (21a) on the magnetic recording medium;
a sensing means (23) for sensing a magnetic recording medium inserted from the insertion slot (22) before the magnetic head (34) detects a magnetic stripe (21a) is provided, and
a decision means (2) for determining whether a magnetic recording medium having data recorded in the magnetic stripe (21a) is inserted on the basis of a detection signal output from the magnetic stripe detection unit (10), wherein
the magnetic field generation unit (8) is provided near the insertion slot (22) and causes the disturbing magnetic field to always act on front and rear of the insertion slot (22),
**characterized in that** the decision means (2) is configured to compare a first pattern of the detection signal read out from a memory (6), the first pattern being continuously obtained and stored in the memory (6) for a predetermined period before the sensing means (23) sensed the magnetic recording medium, with a second pattern of the detection signal output from the magnetic stripe detection unit (10) and obtained after the sensing means (23) senses the magnetic recording medium, and,
in case the second pattern differs from the first pattern, the decision means is configured to judge that a magnetic recording medium having data recorded in the magnetic stripe (21a) is inserted.

2. A magnetic recording medium reading device comprising:
an insertion slot (22) into which a magnetic recording medium is inserted;
a magnetic stripe detection unit (10) including a magnetic head (34) for detecting a magnetic stripe (21a) on the magnetic recording medium;
a magnetic field generation unit (8) for generating a disturbing magnetic field to disturb reading of data recorded in the magnetic stripe (21a) on the magnetic recording medium;
a sensing means (23) for sensing a magnetic recording medium inserted from the insertion slot (22) before the magnetic head (34) detects a magnetic stripe (21a) is provided, and
a decision means (2) for determining whether a magnetic recording medium having data recorded in the magnetic stripe (21a) is inserted on the basis of a detection signal output from the magnetic stripe detection unit (10), wherein
the magnetic field generation unit (8) is provided near the insertion slot (22) and causes the disturbing magnetic field to always act on front and rear of the insertion slot (22),
**characterized in that** the decision means (2) is configured to compare a first pattern of the detection signal read out from a memory (6), the first pattern being obtained and stored in the memory (6) for a predetermined period immediately after the sensing means (23) sensed the magnetic recording medium, with a second pattern of the detection signal output from the magnetic stripe detection unit (10) and obtained after the first pattern was obtained, and,
in case the second pattern differs from the first pattern, the decision means is configured to judge that a magnetic recording medium having data recorded in the magnetic stripe (21a) is inserted.

3. The magnetic recording medium reading device according to claim 1, wherein the predetermined period is a period immediately before the sensing means (23) senses the magnetic recording medium.

4. The magnetic recording medium reading device according to claim 1, wherein
the decision means (2) is configured to continuously sample the detection signal before the sensing means (23) senses the magnetic recording medium, compute the sum total of sampling values for a predetermined period or an average value of sum totals of sampling values for respective periods of a plurality of predetermined periods as the first pattern and store said first pattern in the memory (6), and further configured to sample the detection signal obtained after the sensing means (23) sensed the magnetic recording medium and to compute the sum total of sampling values for a predetermined period or an average value of sum totals of sampling values for respective periods of a plurality of predetermined periods as the second pattern.

5. The magnetic recording medium reading device according to claim 2, wherein the decision means (2) is configured to sample the detection signal immediately after the sensing means (23) sensed the magnetic recording medium, compute the sum total of sampling values for a predetermined period or an average value of sum totals of sampling values for respective periods of a plurality of predetermined periods as the first pattern and store said first pattern in the memory (6), and further configured to sample the detection signal obtained after the sensing means (23) sensed the magnetic recording medium and after the computing of the first pattern and to compute the sum total of sampling values for a predetermined period or an average value of sum totals of sampling values for respective periods of a plurality of predetermined periods as the second pattern.

## Patentansprüche

1. Magnetaufzeichnungsmedium-Lesevorrichtung, die Folgendes umfasst:
einen Einsetzschlitz (22), in den ein Magnetaufzeichnungsmedium eingesetzt ist;
eine Magnetstreifendetektionseinheit (10), die einen Magnetkopf (34) zum Detektieren eines Magnetstreifens (21a) auf dem Magnetaufzeichnungsmedium enthält;
eine Magnetfelderzeugungseinheit (8) zum Erzeugen eines Störmagnetfeldes, um ein Lesen von Daten, die im Magnetstreifen (21a) auf dem Magnetaufzeichnungsmedium aufgezeichnet sind, zu stören;
ein Erfassungsmittel (23) zum Erfassen eines Magnetaufzeichnungsmediums, das vom Einsetzschlitz (22) eingesetzt ist, bevor der Magnetkopf (34) detektiert, dass ein Magnetstreifen (21a) bereitgestellt ist, und
ein Entscheidungsmittel (2) zum Bestimmen, ob ein Magnetaufzeichnungsmedium, das im Magnetstreifen (21a) aufgezeichnete Daten besitzt, eingesetzt ist, auf der Grundlage eines Detektionssignals, das von der Magnetstreifendetektionseinheit (10) ausgegeben wurde, wobei
die Magnetfelderzeugungseinheit (8) in der Nähe des Einsetzschlitzes (22) vorgesehen ist und bewirkt, dass das Störmagnetfeld immer auf die Vorderseite und Rückseite des Einsetzschlitzes (22) wirkt,
**dadurch gekennzeichnet, dass** das Entscheidungsmittel (2) konfiguriert ist, ein erstes Muster des Detektionssignals, das aus einem Speicher (6) ausgelesen wird, wobei das erste Muster kontinuierlich erhalten wird und für einen vorgegebenen Zeitraum, bevor das Erfassungsmittel (23) das Magnetaufzeichnungsmedium erfasst hat, im Speicher (6) gespeichert ist, mit einem zweiten Muster des Detektionssignals, das aus der Magnetstreifendetektionseinheit (10) ausgegeben wird und erhalten wird, nachdem das Erfassungsmittel (23) das Magnetaufzeichnungsmedium erfasst hat, und,
falls das zweite Muster vom ersten Muster abweicht, das Entscheidungsmittel konfiguriert ist, zu beurteilen, dass ein Magnetaufzeichnungsmedium, das im Magnetstreifen (21a) aufgezeichnete Daten besitzt, eingesetzt ist.

2. Magnetaufzeichnungsmedium-Lesevorrichtung, die Folgendes umfasst:
einen Einsetzschlitz (22), in den ein Magnetaufzeichnungsmedium eingesetzt ist;
eine Magnetstreifendetektionseinheit (10), die einen Magnetkopf (34) zum Detektieren eines Magnetstreifens (21a) auf dem Magnetaufzeichnungsmedium enthält;
eine Magnetfelderzeugungseinheit (8) zum Erzeugen eines Störmagnetfeldes, um ein Lesen von Daten, die im Magnetstreifen (21a) auf dem Magnetaufzeichnungsmedium aufgezeichnet sind, zu stören;
ein Erfassungsmittel (23) zum Erfassen eines Magnetaufzeichnungsmediums, das vom Einsetzschlitz (22) eingesetzt ist, bevor der Magnetkopf (34) detektiert, dass ein Magnetstreifen (21a) bereitgestellt worden ist, und
ein Entscheidungsmittel (2) zum Bestimmen, ob ein Magnetaufzeichnungsmedium, das im Magnetstreifen (21a) aufgezeichnete Daten besitzt, eingesetzt ist, auf der Grundlage eines Detektionssignals, das von der Magnetstreifendetektionseinheit (10) ausgegeben wurde, wobei
die Magnetfelderzeugungseinheit (8) in der Nähe des Einsetzschlitzes (22) vorgesehen ist und bewirkt, dass das Störmagnetfeld immer auf die Vorderseite und Rückseite des Einsetzschlitzes (22) wirkt,
**dadurch gekennzeichnet, dass** das Entscheidungsmittel (2) konfiguriert ist, ein erstes Muster des Detektionssignals, das aus einem Speicher (6) ausgelesen wird, wobei das erste Muster erhalten wird und für einen vorgegebenen Zeitraum, unmittelbar nachdem das Erfassungsmittel (23) das Magnetaufzeichnungsmedium erfasst hat, im Speicher (6) gespeichert ist, mit einem zweiten Muster des Detektionssignals, das aus der Magnetstreifendetektionseinheit (10) ausgegeben wird und erhalten wird, nachdem das erste Muster erhalten worden ist, und,
falls das zweite Muster vom ersten Muster abweicht, das Entscheidungsmittel konfiguriert ist, zu beurteilen, dass ein Magnetaufzeichnungsmedium, das im Magnetstreifen (21a) aufgezeichnete Daten besitzt, eingesetzt ist.

3. Magnetaufzeichnungsmedium-Lesevorrichtung nach Anspruch 1, wobei der vorgegebene Zeitraum ein Zeitraum unmittelbar vor dem Erfassen des Magnetaufzeichnungsmediums durch das Erfassungsmittel (23) ist.

4. Magnetaufzeichnungsmedium-Lesevorrichtung nach Anspruch 1, wobei
das Entscheidungsmittel (2) konfiguriert ist, das Detektionssignal kontinuierlich abzutasten, bevor das Erfassungsmittel (23) das Magnetaufzeichnungsmedium erfasst, die Gesamtsumme von Abtastwerten für einen vorgegebenen Zeitraum oder eine Durchschnittswert von Gesamtsummen von Abtastwerten für entsprechende Zeiträume von mehreren vorgegebenen Zeiträumen als das erste Muster zu berechnen und das erste Muster im Speicher (6) zu speichern, und ferner konfiguriert ist, das Detektionssignal, das erhalten wird, nachdem das Erfassungsmittel (23) das Magnetaufzeichnungsmedium erfasst hat, abzutasten und die Gesamtsumme von Abtastwerten für einen vorgegebenen Zeitraum oder einen Durchschnittswert von Gesamtsummen von Abtastwerten für entsprechende Zeiträume von mehreren vorgegebenen Zeiträumen als das zweite Muster zu berechnen.

5. Magnetaufzeichnungsmedium-Lesevorrichtung nach Anspruch 2, wobei
das Entscheidungsmittel (2) konfiguriert ist, das Detektionssignal abzutasten, unmittelbar nachdem das Erfassungsmittel (23) das Magnetaufzeichnungsmedium erfasst hat, die Gesamtsumme von Abtastwerten für einen vorgegebenen Zeitraum oder eine Durchschnittswert von Gesamtsummen von Abtastwerten für entsprechende Zeiträume von mehreren vorgegebenen Zeiträumen als das erste Muster zu berechnen und das erste Muster im Speicher (6) zu speichern, und ferner konfiguriert ist, das Detektionssignal, das erhalten wird, nachdem das Erfassungsmittel (23) das Magnetaufzeichnungsmedium erfasst hat und nach dem Berechnen des ersten Musters, abzutasten und die Gesamtsumme von Abtastwerten für einen vorgegebenen Zeitraum oder einen Durchschnittswert von Gesamtsummen von Abtastwerten für entsprechende Zeiträume von mehreren vorgegebenen Zeiträumen als das zweite Muster zu berechnen.

## Revendications

1. Dispositif de lecture d'un support d'enregistrement magnétique comprenant :
une fente d'insertion (22) dans laquelle est inséré un support d'enregistrement magnétique ;
une unité de détection de bande magnétique (10) incluant une tête magnétique (34) destinée à détecter une bande magnétique (21a) sur un support d'enregistrement magnétique ;
une unité de génération de champ magnétique (8) destinée à générer un champ magnétique perturbateur pour perturber la lecture des données enregistrées sur la bande magnétique (21a) sur le support d'enregistrement magnétique ;
un moyen de captage (23), destiné à capter un support d'enregistrement magnétique inséré depuis la fente d'insertion (22) avant que la tête magnétique (34) détecte la présence d'une bande magnétique (21a), et
un moyen de décision (2) destiné à déterminer si un support d'enregistrement magnétique, ayant des données enregistrées sur la bande magnétique (21a), est inséré sur la base d'un signal de détection émis depuis l'unité de détection de bande magnétique (10), dans lequel l'unité de génération de champ magnétique (8) est prévue à proximité de la fente d'insertion (22) et amène le champ magnétique perturbateur à toujours agir sur l'avant et l'arrière de la fente d'insertion (22),
**caractérisé en ce que** le moyen de décision (2) est configuré pour comparer un premier motif du signal de détection lu depuis une mémoire (6), le premier motif étant obtenu en continu et stocké dans la mémoire (6) pour une période prédéterminée avant que le moyen de captage (23) n'ait capté le support d'enregistrement magnétique, à un deuxième motif du signal de détection émis depuis l'unité de détection de bande magnétique (10) et obtenu après que le moyen de captage (23) capte le support d'enregistrement magnétique, et,
dans le cas où le deuxième motif diffère du premier motif, le moyen de décision est configuré pour juger qu'un support d'enregistrement magnétique ayant des données enregistrées sur la bande magnétique (21a) est inséré.

2. Dispositif de lecture d'un support d'enregistrement magnétique comprenant :
une fente d'insertion (22) dans laquelle est inséré un support d'enregistrement magnétique ;
une unité de détection de bande magnétique (10) incluant une tête magnétique (34) destinée à détecter une bande magnétique (21a) sur le support d'enregistrement magnétique ;
une unité de génération de champ magnétique (8) destinée à générer un champ magnétique perturbateur pour perturber la lecture des données enregistrées sur la bande magnétique (21a) sur le support d'enregistrement magnétique ;
un moyen de captage (23), destiné à capter un support d'enregistrement magnétique inséré depuis la fente d'insertion (22) avant que la tête magnétique (34) détecte la présence d'une bande magnétique (21a), et
un moyen de décision (2) destiné à déterminer si un support d'enregistrement magnétique, ayant des données enregistrées sur la bande magnétique (21a), est inséré sur la base d'un signal de détection émis depuis l'unité de détection de bande magnétique (10), dans lequel l'unité de génération de champ magnétique (8) est prévue à proximité de la fente d'insertion (22) et amène le champ magnétique perturbateur à toujours agir sur l'avant et l'arrière de la fente d'insertion (22),
**caractérisé en ce que** le moyen de décision (2) est configuré pour comparer un premier motif du signal de détection lu depuis une mémoire (6), le premier motif étant obtenu et stocké dans la mémoire (6) pour une période prédéterminée immédiatement après que le moyen de captage (23) a capté le support d'enregistrement magnétique, à un deuxième motif du signal de détection émis depuis l'unité de détection de bande magnétique (10) et obtenu après l'obtention du premier motif, et,
dans le cas où le deuxième motif diffère du premier motif, le moyen de décision est configuré pour juger qu'un support d'enregistrement magnétique ayant des données enregistrées sur la bande magnétique (21a) est inséré.

3. Dispositif de lecture d'un support d'enregistrement magnétique selon la revendication 1, dans lequel
la période prédéterminée est une période située immédiatement avant que le moyen de captage (23) capte le support d'enregistrement magnétique.

4. Dispositif de lecture d'un support d'enregistrement magnétique selon la revendication 1, dans lequel
le moyen de décision (2) est configuré pour échantillonner en continu le signal de détection avant que le moyen de captage (23) capte le support d'enregistrement magnétique, pour calculer la somme totale des valeurs d'échantillonnage pour une période prédéterminée ou une valeur moyenne des sommes totales des valeurs d'échantillonnage pour des périodes respectives d'une pluralité de périodes prédéterminées à titre de premier motif et pour stocker ledit premier motif dans la mémoire (6), et est en outre configuré pour échantillonner le signal de détection obtenu après que le moyen de captage (23) a capté le support d'enregistrement magnétique, et pour calculer la somme totale des valeurs d'échantillonnage pour une période prédéterminée ou une valeur moyenne des sommes totales des valeurs d'échantillonnage pour des périodes respectives d'une pluralité de périodes prédéterminées à titre de deuxième motif.

5. Dispositif de lecture de support d'enregistrement magnétique selon la revendication 2, dans lequel
le moyen de décision (2) est configuré pour échantillonner le signal de détection immédiatement après que le moyen de captage (23) capte le support d'enregistrement magnétique, pour calculer la somme totale des valeurs d'échantillonnage pour une période prédéterminée ou une valeur moyenne des sommes totales des valeurs d'échantillonnage pour des périodes respectives d'une pluralité de périodes prédéterminées à titre de premier motif et pour stocker ledit premier motif dans la mémoire (6), et est en outre configuré pour échantillonner le signal de détection obtenu après que le moyen de captage (23) a capté le support d'enregistrement magnétique, et après le calcul du premier motif, et pour calculer la somme totale des valeurs d'échantillonnage pour une période prédéterminée ou une valeur moyenne des sommes totales des valeurs d'échantillonnage pour des périodes respectives d'une pluralité de périodes prédéterminées à titre de deuxième motif.
